(19) Europäisches Patentamt
European Patent Office
Office européen des brevets

(11) EP 4 435 034 A1

(12) EUROPEAN PATENT APPLICATION
published in accordance with Art. 153(4) EPC

(43) Date of publication:
**25.09.2024 Bulletin 2024/39**

(21) Application number: **22895384.0**

(22) Date of filing: **26.10.2022**

(51) International Patent Classification (IPC):
***C08G 65/40*** *(2006.01)*

(52) Cooperative Patent Classification (CPC):
**C08G 65/40**

(86) International application number:
**PCT/JP2022/039948**

(87) International publication number:
**WO 2023/090100 (25.05.2023 Gazette 2023/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.11.2021 JP 2021187924**

(71) Applicants:
- **Honshu Chemical Industry Co., Ltd.**
  **Tokyo 103-0027 (JP)**
- **Daikin Industries, Ltd.**
  **Osaka-shi, Osaka 530-0001 (JP)**

(72) Inventors:
- **HASHIKAWA, Akihiro**
  **Wakayama-shi, Wakayama 641-0007 (JP)**
- **SHIMODA, Tomoaki**
  **Wakayama-shi, Wakayama 641-0007 (JP)**
- **KANO, Ryoto**
  **Wakayama-shi, Wakayama 641-0007 (JP)**
- **NAKANO, Yasuhiro**
  **Osaka-shi, Osaka 530-8323 (JP)**

(74) Representative: **Grünecker Patent- und Rechtsanwälte**
**PartG mbB**
**Leopoldstraße 4**
**80802 München (DE)**

# (54) METHOD FOR PRODUCING POLYETHERNITRILE

(57) An object is to provide a method for producing a polyether nitrile having stable melt flowability, in which the melt flowability during molding is less likely to vary and decrease when the polyether nitrile is repeatedly produced. As a solution, a method for producing a polyether nitrile obtained by allowing an aromatic dihydroxy compound (I) and a dihalobenzonitrile compound (II) to undergo a polycondensation reaction in the presence of a basic compound (III) is provided. The method includes a step (Step 1) of feeding a reaction raw material composed of the aromatic dihydroxy compound (I), the dihalobenzonitrile compound (II), and the basic compound (III) and a reaction solvent to a polycondensation reactor to perform a polycondensation reaction, a step (Step 2) of taking out a polymer obtained by the polycondensation reaction from the polycondensation reactor, and a step (Step 3) of removing the polymer remaining in the polycondensation reactor and feeding the reaction solvent and the reaction raw material anew to the polycondensation reactor to perform a new polycondensation reaction.

EP 4 435 034 A1

## Description

### Technical Field

The present invention relates to a production method in which melt flowability is stable when a polyether nitrile is repeatedly produced.

### Background Art

Aromatic ether copolymers are not only excellent in heat resistance, flame resistance, chemical resistance, and mechanical strength but also are thermoplastic and can be melt-molded by heating, and thus are useful resins that can provide various molded articles such as filaments, films, sheets, tubes, pipes, and round bars through molding methods such as injection molding, extrusion molding, and heat compression molding.
(Co)polymers are generally heated, melted, and kneaded with resin materials added and then formed into molding materials (resin compositions) such as pellets and chips, which are processed into various molded articles, but aromatic ether copolymers are useful as base resins for molding materials (resin compositions).
Polyether nitrile (e.g., PTLs 1 and 2), which is one of the aromatic ether copolymers, is a resin having the highest level of heat resistance and high mechanical strength among thermoplastic resins. This is obtained in the form of a polymer powder by cleaning and drying a polyether nitrile obtained by a polycondensation reaction. This powder is used in the form of a molding material such as pellets or chips for ease of processing. It is demanded that a molded article having good qualities such as heat resistance and mechanical properties can be stably produced using a polyether nitrile resin and a molding material thereof.

### Citation List

### Patent Literature

PTL 1: Japanese Unexamined Patent Application Publication No. 60-147439
PTL 2: Japanese Unexamined Patent Application Publication No. 61-055120

### Summary of Invention

### Technical Problem

The prevent inventors have found that in the process for industrially producing a polyether nitrile, particularly, in the production using a batch-type reactor, a problem will become apparent in that when polymerization products (resin powders) obtained through polymerization, cleaning, and drying are repeatedly produced, their quality, particularly, melt flowability (melt flow rate: MFR), greatly varies depending on the batch and decreases.
An object of the present invention is to provide a method for producing a polyether nitrile having stable melt flowability, in which the melt flowability during molding is less likely to vary and decrease when the polyether nitrile is repeatedly produced.

### Solution to Problem

To achieve the above object, the present inventors have conducted intensive studies and found that when a polyether nitrile is repeatedly produced, the polymer obtained by a polycondensation reaction remains in a large amount in a reactor, and as a result of performing a new polycondensation reaction with the residue still contained, the melt flowability during molding of the polyether nitrile obtained varies and decreases, thereby completing the present invention.
The present invention is as follows.

1. A method for producing a polyether nitrile obtained by allowing an aromatic dihydroxy compound (I) and a dihalobenzonitrile compound (II) to undergo a polycondensation reaction in the presence of a basic compound (III), the method including:

a step (Step 1) of feeding a reaction raw material composed of the aromatic dihydroxy compound (I), the dihalobenzonitrile compound (II), and the basic compound (III) and a reaction solvent to a polycondensation

reactor to perform a polycondensation reaction;

a step (Step 2) of taking out a polymer obtained by the polycondensation reaction from the polycondensation reactor; and

a step (Step 3) of removing the polymer remaining in the polycondensation reactor and feeding the reaction solvent and the reaction raw material anew to the polycondensation reactor to perform a new polycondensation reaction.

2. The method for producing a polyether nitrile according to 1., wherein the aromatic dihydroxy compound (I) is a compound represented by general formula (1) below, and the dihalobenzonitrile compound (II) is a compound represented by general formula (2) below. [Chem. 1]

**HO-R-OH** **(1)**

(In the formula, R represents a divalent group represented by general formula (1a) below or general formula (1b) below.)

[Chem. 2]

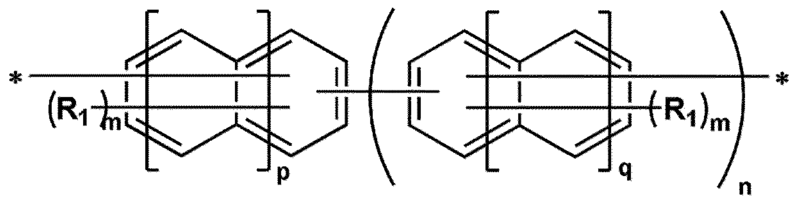

**(1a)**

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, n represents 0 or 1, p and q each independently represent 0, 1, or 2, and each * represents a bonding position.)

[Chem. 3]

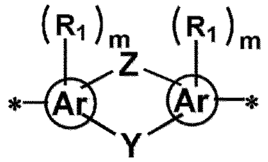

**(1b)**

(In the formula, $R_1$ and m are as defined in general formula (1a), Y represents an oxygen atom, a sulfur atom, a sulfonyl group, a carbonyl group, an alkylidene group having 1 to 15 carbon atoms, a fluorine-containing alkylidene group having 2 to 15 carbon atoms, a cycloalkylidene group having 5 to 15 carbon atoms, a phenylmethylidene group, a phenylethylidene group, a phenylene group, or a fluorenylidene group, Z represents an oxygen atom, a sulfur atom, or non-bridging, each Ar independently represents an aryl group having 6 to 8 carbon atoms, and each * represents a bonding position.)

[Chem. 4]

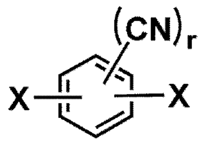

**(2)**

(In the formula, each X independently represents a halogen atom, and r represents an integer of 1 to 4.)

3. The method for producing a polyether nitrile according to 2., wherein R in the compound represented by general formula (1) is general formula (la') below or general formula (1a") below, and r in the compound represented by

general formula (2) is 1.

[Chem. 5]

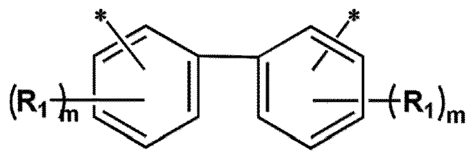

(1a')

(In the formula, $R_1$, m, and * are as defined in general formula (1a).)

[Chem. 6]

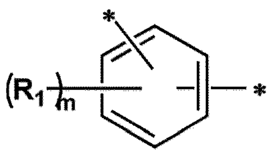

(1a'')

(In the formula, $R_1$, m, and * are as defined in general formula (1a).)

4. The method for producing a polyether nitrile according to 3., wherein the compound represented by general formula (1) is at least one selected from hydroquinone, resorcin, and 4,4'-biphenol.

5. The method for producing a polyether nitrile according to 1., wherein the basic compound (III) is an alkali metal compound.

6. The production method according to 1., wherein a residual polymer amount after the polymer remaining in the reactor has been removed in Step 3 is 5000 ppm or less relative to a theoretical yield of a polymer obtainable from the reaction raw material fed into the reactor when the new polycondensation reaction is performed.

7. The production method according to 1., further including a step (Step 4) of cleaning the polymer taken out from the polycondensation reactor in Step 2.

8. The production method according to 1., wherein a resulting polyether nitrile has a reduced viscosity $\eta_{red}$ of 1 or more and 5 or less.

9. The production method according to 1., wherein the polycondensation reactor is a batch-type reactor. Advantageous Effects of Invention

The production method according to the present invention is very useful in industrial production because even if a polyether nitrile is repeatedly produced in one and the same polycondensation reactor, there is no big difference in the value of melt flowability (melt flow rate: MFR) between a polyether nitrile obtained in the first polycondensation reaction and polyether nitriles obtained in the second and subsequent polycondensation reactions, and a polyether nitrile having stable melt flowability can be repeatedly produced.

Description of Embodiments

The present invention is a method for producing a polyether nitrile, in which an aromatic dihydroxy compound (I) and a dihalobenzonitrile compound (II) is allowed to undergo a polycondensation reaction in the presence of a basic compound (III). The method includes a step (Step 1) of feeding a reaction raw material composed of the aromatic dihydroxy compound (I), the dihalobenzonitrile compound (II), and the basic compound (III) and a reaction solvent to a polycondensation reactor to perform a polycondensation reaction, a step (Step 2) of taking out a polymer obtained by the polycondensation reaction from the polycondensation reactor, and a step (Step 3) of removing the polymer remaining in the polycondensation reactor and feeding the reaction raw material and the reaction solvent anew to the polycondensation reactor to perform a new polycondensation reaction.

In the step (Step 1) of feeding a reaction raw material and a reaction solvent to a polycondensation reactor (hereinafter also referred to simply as a reactor) to perform a polycondensation reaction in the present invention, a conventionally known polycondensation reaction of a polyether nitrile can be applied using the reaction raw material composed of the aromatic dihydroxy compound (I), the dihalobenzonitrile compound (II), and the basic compound (III) and the reaction solvent to be described later.

The reaction raw material and the reaction solvent may be fed to the reactor by any method. For example, the reaction raw material and the reaction solvent may be fed to the reactor one after the other or may be simultaneously

fed to the reactor.

In the step (Step 2) of taking out a polymer obtained by the polycondensation reaction from the polycondensation reactor in the present invention, a conventionally known method can be applied. For example, as will be described in detail later, the polymer obtained by the polycondensation reaction (hereinafter also referred to simply as the polymer) may be taken out in such a manner that the polycondensation reaction product is taken out from the reactor as it is, or the polymer may be taken out in such a manner that a solvent is added to the polycondensation reaction product in the reactor and the resulting solution is taken out.

In the step (Step 3) of removing the polymer remaining in the polycondensation reactor and feeding the reaction solvent and the reaction raw material anew to the polycondensation reactor to perform a new polycondensation reaction in the present invention, the polymer remaining in the reactor may be removed by, for example, washing off the polymer remaining in the polymerizer using a good solvent for the polymer or water, as will be described in detail later.

For the method of feeding the reaction solvent and the reaction raw material anew to the polycondensation reactor to perform a new polycondensation reaction, the polycondensation reaction is performed in the same manner as in Step 1 in the above-mentioned polycondensation reactor from which the remaining polymer has been removed.

<Step 1>

The step (Step 1) of feeding a reaction raw material and a reaction solvent to a polycondensation reactor to perform a polycondensation reaction in the present invention will be described below.

<Aromatic dihydroxy compound (I)>

The aromatic dihydroxy compound (I) in the present invention includes all aromatic compounds having two hydroxy groups, among which a compound represented by general formula (1) below is preferred.

[Chem. 7]

**HO-R-OH** **(1)**

(In the formula, R represents a divalent group represented by general formula (1a) below or general formula (1b) below.)

[Chem. 8]

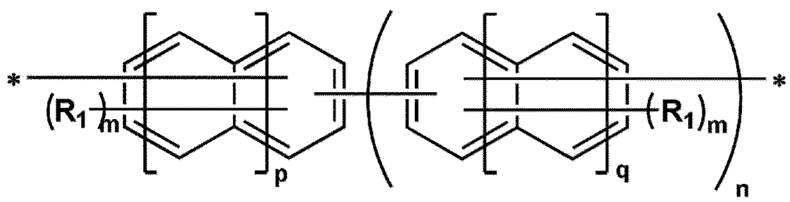

**(1a)**

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, n represents 0 or 1, p and q each independently represent 0, 1, or 2, and each * represents a bonding position.)

[Chem. 9]

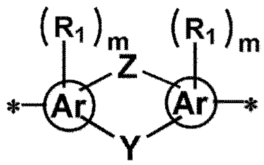

**(1b)**

(In the formula, $R_1$ and m are as defined in general formula (1a), Y represents an oxygen atom, a sulfur atom, a sulfonyl group, a carbonyl group, an alkylidene group having 1 to 15 carbon atoms, a fluorine-containing alkylidene group having 2 to 15 carbon atoms, a cycloalkylidene group having 5 to 15 carbon atoms, a phenylmethylidene group, a phenylethylidene group, a phenylene group, or a fluorenylidene group, Z represents an oxygen atom, a sulfur atom, or non-bridging, each Ar independently represents an aryl group having 6 to 8 carbon atoms, and each * represents a bonding position.)

Each $R_1$ in general formula (1a) independently represents a linear or branched alkyl group having 1 to 6 carbon

atoms, a cyclic alkyl group having 5 or 6 carbon atoms, or a phenyl group, preferably a linear or branched alkyl group having 1 to 4 carbon atoms, a cyclic alkyl group having 5 or 6 carbon atoms, or a phenyl group, more preferably a linear or branched alkyl group having 1 to 4 carbon atoms or a phenyl group, particularly preferably an alkyl group having one carbon atom, that is, a methyl group.

In general formula (1a), each m independently represents an integer of 0 to 4, preferably 0 or an integer of 1 or 2, more preferably 0 or 1, particularly preferably 0.

In general formula (1a), n represents 0 or 1, preferably 1.

In general formula (1a), p and q each independently represent 0, 1, or 2, preferably 0 or 1, particularly preferably 0.

General formula (1a) above where n is 1 and p and q are 0 is represented as general formula (la') below.

[Chem. 10]

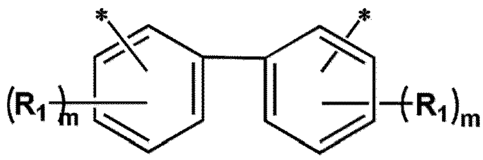
(1a')

(In the formula, $R_1$, m, and * are as defined in general formula (1a).)

In general formula (1a'), the position of bonding to OH in general formula (1) is preferably the ortho or para position, particularly preferably the para position, with respect to the position of direct bonding between the two benzene rings. When m is 1 or 2, the bonding position of $R_1$ is preferably the meta position with respect to the position of direct bonding between the two benzene rings. Preferred examples of $R_1$ and m are the same as those in general formula (1a).

General formula (1a) where n, p, and q are 0 is represented as general formula (1a") below.

[Chem. 11]

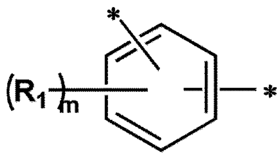
(1a")

(In the formula, $R_1$, m, and * are as defined in general formula (1a).)

In general formula (1a"), the position of bonding to OH in general formula (1) is preferably the para or meta position, particularly preferably the para position, with respect to the other bonding position. Preferred examples of $R_1$ and m are the same as those in general formula (1a).

$R_1$ and m in general formula (1b) are as defined in general formula (1a), and preferred examples are also the same.

Y in general formula (1b) represents an oxygen atom, a sulfur atom, a sulfonyl group, a carbonyl group, an alkylidene group having 1 to 15 carbon atoms, a fluorine-containing alkylidene group having 2 to 15 carbon atoms, a cycloalkylidene group having 5 to 15 carbon atoms, a phenylmethylidene group, a phenylethylidene group, a phenylene group, or a fluorenylidene group, and the cycloalkylidene group having 5 to 15 carbon atoms may include a branched-chain alkyl group. Specific examples of the cycloalkylidene group include a cyclopentylidene group (5 carbon atoms), a cyclohexylidene group (6 carbon atoms), a 3-methylcyclohexylidene group (7 carbon atoms), a 4-methylcyclohexylidene group (7 carbon atoms), a 3,3,5-trimethylcyclohexylidene group (9 carbon atoms), a cycloheptylidene group (7 carbon atoms), and a cyclododecanylidene group (12 carbon atoms).

Y in general formula (1b) is preferably a sulfonyl group, a carbonyl group, an alkylidene group having 1 to 6 carbon atoms, a fluorine-containing alkylidene group having 2 to 6 carbon atoms, a cycloalkylidene group having 5 to 12 carbon atoms, a phenylmethylidene group, a phenylethylidene group, a phenylene group, or a fluorenylidene group, more preferably a sulfonyl group, a carbonyl group, an alkylidene group having 1 to 3 carbon atoms, a fluorine-containing alkylidene group having 2 or 3 carbon atoms, a cycloalkylidene group having 6 to 12 carbon atoms, a phenylmethylidene group, or a fluorenylidene group, still more preferably an alkylidene group having 3 carbon atoms, that is, a propylidene group, a fluorine-containing alkylidene group having 3 carbon atoms, that is, a fluorine-containing propylidene group, a cycloalkylidene group having 6 to 12 carbon atoms, or a fluorenylidene group, particularly preferably a 2,2'-isopropylidene group, a 2,2'-hexafluoroisopropylidene group, a cyclohexylidene group, a 3,3,5-trimethylcyclohexylidene group, a cyclododecanylidene group, or a fluorenylidene group.

Z in general formula (1b) represents an oxygen atom, a sulfur atom, or non-bridging, preferably an oxygen

atom or non-bridging, more preferably non-bridging.

Each Ar in general formula (1b) independently represents an aryl group having 6 to 8 carbon atoms, more preferably an aryl group having 6 carbon atoms.

R in general formula (1) is preferably a divalent group represented by general formula (1a), more preferably a divalent group represented by general formula (Ia') or a divalent group represented by general formula (1a"), particularly preferably a divalent group represented by general formula (1a').

Specific examples of the aromatic dihydroxy compound (I) in the present invention include hydroquinone, resorcin, 2-phenylhydroquinone, 4,4'-biphenol, 3,3'-biphenol, 2,6-dihydroxynaphthalene, 2,7-dihydroxynaphthalene, 1,1'-bi-2-naphthol, 2,2'-bi-1-naphthol, 1,3-bis[1-methyl-1-(4-hydroxyphenyl)ethyl]benzene, 1,4-bis[1-methyl-1-(4-hydroxyphenyl)ethyl]benzene, 1,3-(4-hydroxybenzoylbenzene), 1,4-(4-hydroxybenzoylbenzene), 1,3-bis(4-hydroxyphenoxy)benzene, 1,4-bis(4-hydroxyphenoxy)benzene, 1,4-bis(4-hydroxyphenyl)benzene, 1,3-bis(4-hydroxyphenyl)benzene, 4,4'-isopropylidene biphenol (Bis-A), 2,2-bis(4-hydroxyphenyl)-1,1,1,3,3,3-hexafluoropropane, 4,4'-bishydroxybenzophenone, 4,4'-bishydroxydiphenylsulfone, 4,4'-dihydroxydiphenyl ether, bis(4-hydroxyphenyl)methane, 9,9-bis(4-hydroxyphenyl)fluorene, 9,9-bis(3-phenyl-4-hydroxyphenyl)fluorene, 9,9-bis(3,5-diphenyl-4-hydroxyphenyl)fluorene, 9,9-bis(4-hydroxy-3-methylphenyl)fluorene, 9,9-bis(4-hydroxy-3,5-dimethylphenyl)fluorene, 9,9-bis(4-hydroxy-3-cyclohexylphenyl)fluorene, 4,4'-isopropylidene bis(2-phenylphenol), bisphenol Z (1,1-bis(4-hydroxyphenyl)cyclohexane), bisphenol TMC (1,1-bis(4-hydroxyphenyl)-3,3,5-trimethylcyclohexane), 1,1-bis(4-hydroxyphenyl)cyclododecane, and 1,1-bis(4-hydroxyphenyl)-1-phenylethane. At least one of these compounds is used. These may be used alone or may be used in combination of two or more.

Of these, at least one selected from hydroquinone, resorcin, and 4,4'-biphenol is preferred, hydroquinone, resorcin, or 4,4'-biphenol is more preferred, and 4,4'-biphenol is particularly preferred.

<Dihalobenzonitrile compound (II)>

The dihalobenzonitrile compound (II) in the present invention includes all nitrile compounds having two halogen groups, among which a compound represented by general formula (2) below is preferred.

[Chem. 12]

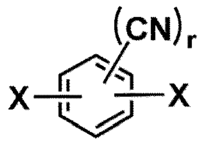 (2)

(In the formula, each X independently represents a halogen atom, and r represents an integer of 1 to 4.)

Each X in general formula (2) above independently represents a halogen atom, preferably independently represents a chlorine atom, a bromine atom, or an iodine atom, more preferably independently represents a chlorine atom or a bromine atom, particularly preferably represents a chlorine atom.

In general formula (2) above, r represents an integer of 1 to 4, preferably 1 or 2, more preferably 1. When r is 1, a structural configuration in which halogen atoms are bonded to both the ortho positions with respect to the cyano group is preferred.

Specific examples of the dihalobenzonitrile compound (II) in the present invention include 2,6-difluorobenzonitrile, 2,5-difluorobenzonitrile, 2,4-difluorobenzonitrile, 2,6-dichlorobenzonitrile, 2,5-dichlorobenzonitrile, 2,4-dichlorobenzonitrile, 2,6-dibromobenzonitrile, 2,5-dibromobenzonitrile, 2,4-dibromobenzonitrile, 2,6-dinitrobenzonitrile, 2,5-dinitrobenzonitrile, 2,4-dinitrobenzonitrile, and 1,4-dichloro-2,5-dicyanobenzene. The dihalobenzonitrile compound (II) may also be a reactive derivative thereof. Of these, 2,6-difluorobenzonitrile and 2,6-dichlorobenzonitrile are suitable for use from the viewpoint of, for example, reactivity and economic efficiency. The compound represented by general formula (2) above may be a combination of two or more of these compounds.

Examples of the reactive derivative include, in the case of structures derived from 2,6-dihalobenzonitrile, compounds that can react with aromatic dihydroxy compounds as represented by the following general formulae, and these mean compounds derived from the reactions between two 2,6-dihalobenzonitriles and between 2,6-dihalobenzonitrile and an aromatic dihydroxy compound.

[Chem. 13]

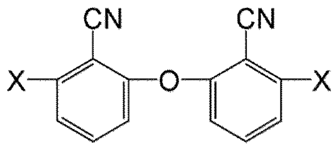

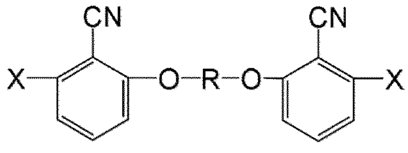

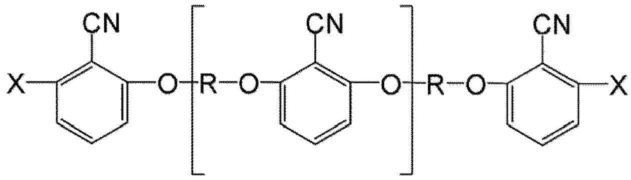

(In the formulae, R is as defined in general formula (1), and X is as defined in general formula (2).)

<Amount of raw material used>

In the production method according to the present invention, the aromatic dihydroxy compound (I) is used at a molar ratio in the range of 0.8 to 1.2 relative to the dihalobenzonitrile compound (II). In particular, the aromatic dihydroxy compound (I) is preferably used in the range of 0.9 to 1.1, more preferably used in the range 0.95 to 1.05, particularly preferably used in the range of 0.99 to 1.01. To maximize the polymerization rate in the polycondensation reaction, the aromatic dihydroxy compound (I) and the dihalobenzonitrile compound (II) are preferably used at a molar ratio of substantially 1.00.

The aromatic dihydroxy compound (I) and the dihalobenzonitrile compound (II) used may each be a combination of two or more compounds. When two or more compounds are used for each, they are used such that the molar ratio between the total amount of the compounds as the aromatic dihydroxy compound (I) and the total amount of the compounds as the dihalobenzonitrile compound (II) is as described above.

<Basic compound (III)>

The basic compound (III) may be any compound, whether an organic base or an inorganic base, as long as it promotes the desalting polycondensation reaction and does not affect the quality, but is preferably an inorganic base, especially preferably an alkali metal compound or an alkaline-earth metal compound, particularly preferably an alkali metal compound.

Organic bases include tetramethylammonium hydroxide, triethylamine, N,N-diisopropylethylamine, 1,1,3,3-tetramethylguanidine (TMG), N,N-dimethyl-4-aminopyridine (DMAP), 2,6-lutidine, pyridine, 1,8-diazabicyclo[5.4.0]-7-undecene (DBU), 1,5-diazabicyclo[4.3.0]-5-nonene (DBN), 7-methyl-1,5,7-triazabicyclo[4.4.0]dec-5-ene (MTBD), 1,5,7-triazabicyclo[4.4.0]dec-5-ene (TBD), 1,8-bis(dimethylaminonaphthalene) (DMAN), 1,4-diazabicyclo[2.2.2]octane (DABCO), tert-butylimino-tri(pyrrolidino)phosphorane, tert-butylimino-tris(dimethylamino)phosphorane, 2-tert-butylimino-2-diethylamino-1,3-dimethylperhydro-1,3,2-diazaphosphorine, tert-octylimino-tris(dimethylamino)phosphorane, phosphazene base $P_2$-Et, phosphazene base $P_2$-t-Bu, phosphazene base $P_2$-t-Bu, phosphazene base $P_4$-t-Bu, and phosphazene base $P_4$-t-Oct.

Among inorganic bases, examples of alkali metal compounds include alkali metals such as lithium, rubidium, cesium, potassium, and sodium; alkali metal hydrides such as lithium hydride, rubidium hydride, cesium hydride, potassium hydride, and sodium hydride; alkali metal hydroxides such as lithium hydroxide, rubidium hydroxide, cesium hydroxide, potassium hydroxide, and sodium hydroxide; alkali metal carbonates such as lithium carbonate, rubidium carbonate, cesium carbonate, potassium carbonate, and sodium carbonate; and alkali metal hydrogen carbonates such as lithium hydrogen carbonate, rubidium hydrogen carbonate, cesium hydrogen carbonate, potassium hydrogen carbonate, and sodium hydrogen carbonate. These may be used alone or in combination of two or more.

By using these alkali metal compounds having a specific surface area of 0.3 $m^2/g$ or more, the desalting polycondensation reaction can be performed with high efficiency. The specific surface area of the alkali metal compound catalyst is preferably 0.8 $m^2/g$ or more, more preferably 1.2 $m^2/g$ or more. By using an alkali metal compound having a larger specific surface area, the chance of contact between the catalyst and the reaction raw materials is further increased, and the desalting polycondensation reaction can be performed with higher efficiency. When the specific surface area is smaller than 0.3 $m^2/g$, the desalting polycondensation reaction cannot be performed with sufficiently high efficiency unless the amount of catalyst is increased, but an increase in the amount of catalyst is not preferred because the polycondensate quality is affected.

From the above, the basic compound (III) in the production method according to the present invention is preferably an alkali metal carbonate such as lithium carbonate, rubidium carbonate, cesium carbonate, potassium carbonate, or sodium carbonate, more preferably lithium carbonate, potassium carbonate, or sodium carbonate, particularly preferably potassium carbonate or sodium carbonate having a specific surface area of 0.3 $m^2/g$ or more from the viewpoint of availability.

In the above desalting polycondensation reaction, the amount of the basic compound (III) used, for example, in the case of an alkali metal compound, is usually preferably at least 2 times that of the dihydroxy compound (I) on a molar basis in terms of alkali metal ions contained, but side reactions, such as cleavage of an ether bond formed, will occur if a large excess of the alkali metal compound is used. Thus, the amount used is preferably in the range of 2 to 4 times, more preferably in the range of 2 to 2.4 times, particularly preferably in the range of 2 to 2.2 times, on a molar basis.

Examples of the method of the polycondensation reaction of a polyether nitrile in the present invention include, but are not limited to, a method in which the aromatic dihydroxy compound (I) and the basic compound (III) are allowed to react in a solvent to obtain a basic compound salt of the aromatic dihydroxy compound (I), which is then allowed to undergo a desalting polycondensation reaction with the dihalobenzonitrile compound (II), and a method in which a desalting polycondensation reaction of a basic compound salt of the aromatic dihydroxy compound (I) with the dihalobenzonitrile compound (II) is allowed to proceed in a state where the aromatic dihydroxy compound (I), the dihalobenzonitrile compound (II), and the basic compound (III) coexist.

When the compound represented by general formula (1) as the aromatic dihydroxy compound (I) and the compound represented by general formula (2) as the dihalobenzonitrile compound (II) are allowed to undergo a polycondensation reaction in the presence of the basic compound (III), a polyether nitrile having a repeating unit represented by general formula (3) below is obtained. The reaction formula in this case is shown below.

[Chem. 14]

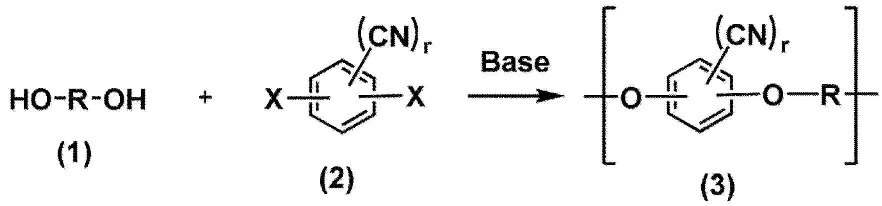


(In the formula, R is as defined in general formula (1), X and r are as defined in general formula (2), and Base means the basic compound (III).)

Alternatively, the polycondensation reaction may be performed using a presynthesized alkali metal salt of the aromatic dihydroxy compound (I) and the dihalobenzonitrile compound (II).

In producing the polyether nitrile, the polycondensation reaction may be performed through divided steps of an oligomer formation step (A) and a polymerization step (B), in which the reaction is performed in different ways, or through a single undivided step.

The oligomer formation step (A) is a step of allowing the aromatic dihydroxy compound (I) and the dihalobenzonitrile compound (II) to undergo a polycondensation reaction in the presence of the basic compound (III) to form an oligomer. The oligomer in this case is not particularly limited, and a polycondensation reaction product having a polymer reduced viscosity of about less than 1 is referred to as an oligomer.

The polymer formation step (B) is a step of further subjecting the oligomer obtained in the step (A) to the polycondensation reaction to form a polymer. As the oligomer at this time, the polycondensation reaction product in the step (A) can be used as it is, or an oligomer isolated by additionally performing the step (A) can also be used.

The polycondensation reaction involves an operation to remove water generated during a desalting reaction out of the system. The method of the operation is, for example, a method in which the reaction is run at a temperature at which the desalting reaction proceeds in the presence of a solvent that forms an azeotrope with water, and during the reaction, water is distilled off the reaction mixture by means of the solvent that forms an azeotrope with water. This allows the reaction to be maintained in a substantially anhydrous state. The temperature at which the desalting reaction starts is typically around 130°C, while depending on the raw materials. For example, in the case of using 4,4'-biphenol as the aromatic dihydroxy compound (I), 2,6-dichlorobenzonitrile as the dihalobenzonitrile compound (II), potassium carbonate, sulfolane (boiling point, 285°C) as an aprotic solvent, and toluene as the solvent that forms an azeotrope with water, the reaction temperature is preferably in the range of 130°C to 170°C.

When the reaction is continued, it is preferable to maintain the reaction system in a substantially anhydrous state while removing water produced as a result of the reaction. When the water produced is not sufficiently removed, the water may react with the dihalobenzonitrile compound (II) to form a by-product having a phenol skeleton, resulting

in the production of a low-molecular-weight product alone. That is, to obtain a high-molecular-weight polyether nitrile, the reaction system preferably contains substantially no water, preferably less than 0.5 wt% of water.

The polycondensation reaction is performed in an inert atmosphere, such as a nitrogen atmosphere, under atmospheric pressure, but may also be performed under increased pressure or reduced pressure.

<Solvent>

In the polycondensation reaction, a reaction solvent can be used, and it is preferable to use an aprotic solvent as the reaction solvent.

Specific examples of the aprotic solvent include N,N-dimethylacetamide, N,N-dimethylformamide, N-methyl-2-pyrolidone, 1,3-dimethyl-2-imidazolidinone, γ-butyrolactone, sulfolane, dimethyl sulfoxide, diethyl sulfoxide, dimethyl sulfone, diethyl sulfone, diisopropyl sulfone, diphenyl sulfone, diphenyl ether, benzophenone, dialkoxybenzenes (the number of carbon atoms in the alkoxy group, 1 to 4), and trialkoxybenzenes (the number of carbon atoms in the alkoxy group, 1 to 4). Among these solvents, high-permittivity polar organic solvents such as N-methyl-2-pyrolidone, N,N-dimethylacetamide, sulfolane, diphenyl sulfone, and dimethyl sulfoxide are particularly suitable for use. These may be used alone or in combination of two or more.

Furthermore, a nitrogen-containing solvent may be used, and specific examples include N-alkylpyrrolidinones such as dimethylacetamide, dimethylformamide, and N-methylpyrrolidinone. Other solvents such as benzophenone and tetra-substituted urea may also be used.

The amount of dipolar aprotic solvent used is not particularly limited as long as the raw materials are homogeneously dissolved and the alkali metal salt is stirred and dispersed well. Any amount that maximizes the volume efficiency of a reactor may be chosen according to the raw materials used and the target polymer. Typically, the amount is chosen in the range of 0.5 to 20 times the total weight of the raw materials and the alkali metal salt.

Specific examples of the solvent that forms an azeotrope with water include aromatic hydrocarbons such as benzene, toluene, xylene, hexane, cyclohexane, octane, chlorobenzene, dioxane, tetrahydrofuran, anisole, and phenetole. These may be used alone or in combination of two or more.

When the solvent that forms an azeotrope with water is used, it is preferable to use the solvent that forms an azeotrope with water in an amount in the range of 1 to 100 parts by weight relative to 100 parts by weight of the aprotic solvent, more preferably in the range of 1 to 10 parts by weight, still more preferably in the range of 2 to 5 parts by weight, from the viewpoint of volume efficiency and solvent recovery.

<Reaction temperature>

The reaction temperature in the polycondensation reaction is in the range of 140°C to 300°C. Within this range, the reaction may be continued at a constant temperature, or the temperature may be increased as the polycondensation reaction proceeds.

When the polycondensation reaction is performed through divided steps of the oligomer formation step (A) and the polymerization step (B), the reaction temperature in the oligomer formation step (A) is preferably in the range of 140°C to 200°C, more preferably in the range of 150°C to 170°C, still more preferably in the range of 155°C to 165°C, and the reaction temperature in the polymerization step (B) is preferably in the range of 200°C to 300°C, more preferably in the range of 210°C to 270°C, still more preferably in the range of 210°C to 240°C, particularly preferably in the range 215°C to 230°C.

For example, in the case of using 4,4'-biphenol as the aromatic dihydroxy compound (I), 2,6-dichlorobenzonitrile as the dihalobenzonitrile compound (II), potassium carbonate, sulfolane (boiling point, 285°C) as an aprotic solvent, and toluene as the solvent that forms an azeotrope with water, the reaction temperature is preferably in the range of 190°C to 280°C.

The reaction time of the polycondensation reaction varies depending on the reaction conditions and the raw materials used, but is typically 3 to 20 hours.

When the polycondensation reaction is performed through divided steps of the oligomer formation step (A) and the polymerization step (B), the reaction time of the step (A), while the reaction is preferably continued until carbon dioxide and water are not substantially produced, is not particularly limited. The reaction time is typically 1 to 6 hours, preferably about 2 to 4 hours. The reaction time of the step (B) varies depending on the reaction conditions and the raw materials used, but is 1 to 8 hours, preferably 1 to 7 hours, more preferably 1 to 6 hours.

For the molecular weight of the target polyether nitrile, the progress of the reaction can be controlled using a monofunctional phenol chain stopper such as p-phenylphenol, phenol, t-butylphenol, or others.

After the desired molecular weight of the target polyether nitrile has been achieved, the polymer is preferably treated with methyl halide, an activated aromatic halide such as benzyl halide, or an aliphatic halide to thereby convert the hydroxy end groups of the polyether nitrile into ether groups which stabilizes the polymer, whereby the polymer can

be provided with good melt and oxidation stability.

<Step 2>

The step (Step 2) of taking out a polymer obtained by the polycondensation reaction from the polycondensation reactor in the present invention will be described below.

For the method of taking out the polymer obtained by the polycondensation reaction from the polycondensation reactor, after completion of the polycondensation reaction, the polymer may be taken out in such a manner that the polycondensation reaction product is taken out from the reactor as it is. Thereafter, the polymer may be solidified by cooling, then pulverized, and subjected to subsequent cleaning, drying, and molding material (pellet or chip) production steps or may be directly put into a cleaning tank with which the cleaning step described later is performed. Alternatively, a solvent for use in the cleaning step described later may be poured into the reactor after completion of the polycondensation reaction to take out the polymer in slurry form or wax form. The polymer thus taken out may be subjected to the cleaning, drying, and molding material (pellet or chip) production steps described later.

<Step 3>

The step (Step 3) of removing the polymer remaining in the polycondensation reactor and feeding the reaction solvent and the reaction raw material anew to the polycondensation reactor to perform a new polycondensation reaction in the present invention will be described.

In Step 3, the polymer remaining in the polycondensation reactor is removed, for example, in the following manner. Specifically, the polymer remaining after the polymer is taken out from the reactor in Step 2 can be removed by a) washing in the system with a good solvent for the polymer (e.g., sulfolane or NMP) as used for the above polycondensation reaction, then b) washing (rinsing) with a solvent (e.g., acetone or methanol) that is a poor solvent for the polymer described later and is compatible with the polymerization solvent, and c) washing with distilled water or ion-exchanged water to dissolve and remove a salt resulting from the reaction, such as potassium chloride.

If the water in c) is compatible with the washing solvent used in a), the step b) may be omitted, and when the solvent in a) is recovered by distillation, water that allows the solvent to be easily separated by distillation from the mixture with the water is readily selected.

When the polymer is dissolved in a good solvent, the system is preferably washed while being heated at or higher than the boiling point under reflux, so that the amount of solvent used can be reduced.

The amount of solvent used and the number of times of washing may be any amount and any number as long as the amount of the remaining polymer falls below the target level.

The residual polymer amount in the reactor can be calculated and determined from the amount of a washing solution used and the amount of the recovered polymer in the washing solution.

The upper limit of the residual polymer amount after the polymer remaining in the reactor has been removed is preferably 5000 ppm or less, more preferably 4000 ppm or less, relative to the theoretical yield of a polymer obtainable from the reaction raw material fed into the reactor when the new polycondensation reaction is performed, and for the rate of decrease in MFR relative to a residue-free polymer to be less than 10%, it is still more preferably 3000 ppm or less, particularly preferably 1000 ppm or less. On the other hand, the lower limit thereof is preferably as close to 0 as possible, but in terms of production efficiency, it is preferably 0.1 ppm or more, more preferably 1 ppm or more.

The above residual polymer amount can be analyzed by, for example, but not necessarily, the following method.

Discharged washing solutions after the washings described above are subjected to the following treatments, and the total amount of the polymer discharged by washing is measured. From this total amount and the amount of the polymer taken out in Step 2, the residual polymer amount in the polymerizer can be determined by calculation.

For example, a) a discharged washing solution (or a partial sample thereof if homogeneous) taken out after washing with a good solvent for the polymer is evaporated to dryness by heating to remove the solvent, the resultant is washed with water to remove the salt and filtered, the residue recovered was dried to remove water, and the amount of the polymer is weighed.

One possible method alternative to the evaporation to dryness by heating is to remove the solvent and the salt by the method of cleaning the polycondensation reaction product as described later and weigh the resulting dry polymer.

For b) the poor solvent for the polymer and c) the discharged washing solution of water, since the polymer is in a precipitated state, the amount of the polymer can be weighed by removing water by drying the residue obtained through direct filtration and washing with water.

In this manner, the total amount of the polymer discharged by washing is determined, and from this total amount and the amount of the polymer taken out in Step 2, the residual polymer amount in the polymerizer can be determined by calculation.

In Step 3, feeding the reaction solvent and the reaction raw material anew to the polycondensation reactor to

perform a new polycondensation reaction means newly performing the polycondensation reaction performed in Step 1 in the above-described reactor from which the remaining polymer has been removed.

The polycondensation reaction product obtained by the new polycondensation reaction can be taken out from the reactor in the same manner as in Step 2 and subjected to the cleaning step and the drying step described later.

In one embodiment of the production method according to the present invention, when a polyether nitrile is produced by batch operation using a batch-type reactor as the polycondensation reactor, the production can be performed as follows: a polycondensation reaction of the polyether nitrile is performed in the reactor in the above-described manner (Step 1); a polymer obtained by the polycondensation reaction is taken out from the reactor in the above-described manner (Step 2); and the polycondensation reaction product remaining in the reactor from which the polymer has been taken out is removed in the above-described manner, and a new polycondensation reaction is then performed (Step 3). As described above, the new polycondensation reaction can be performed in the same manner as in Step 1.

In another embodiment of the production method according to the present invention, when a polyether nitrile is produced by continuous operation using a continuous reactor as the polycondensation reactor, the production can be performed as follows: a polycondensation reaction of the polyether nitrile is performed in the reactor in the above-described manner (Step 1); a polymer obtained by the polycondensation reaction is taken out from the reactor in the above-described manner (Step 2); and meanwhile, a new polymerization is performed while a new polycondensation reaction solution flows into the reactor to thereby remove the remaining polymer (Step 3).

The production method according to the present invention allows a polyether nitrile to be repeatedly produced in one and the same reactor through Steps 1, 2, and 3, and thus this may be referred to as continuous production. That is, the production method according to the present invention may be referred to as a continuous production method.

The polymer obtained by the polycondensation reaction can be cleaned in order to remove the salt, the reaction solvent, and the like contained therein.

In this cleaning step (Step 4), preferably, the reaction solvent in the polymer is subjected to extraction cleaning by a known method using a solvent such as an alcohol, a ketone, an aromatic hydrocarbon, an aliphatic hydrocarbon, or water, and then the salt resulting from the desalting reaction in the polymer is removed by cleaning with preferably water.

In a specific operation, the polycondensation reaction product in pulverized, slurry, or wax form is transferred to a container equipped with a stirrer, and an operation of stirring cleaning with a cleaning solvent and filtration is repeated until the contents of the reaction solvent and the salt fall below the desired levels.

As an apparatus, for example, a combination of a cleaning tank with a pressure filter or a centrifuge, or a multifunctional filtration system capable of performing cleaning, filtration, and drying by itself may be used.

Specific examples, excluding water, of solvents for extraction cleaning of the reaction solvent include alcohols such as methanol, ethanol, propyl alcohol, isopropyl alcohol, butyl alcohol, isobutyl alcohol, sec-butyl alcohol, t-butyl alcohol, n-amyl alcohol, isoamyl alcohol, t-amyl alcohol, n-hexyl alcohol, cyclohexanol, n-octyl alcohol, and capryl alcohol; ketones such as acetone, methyl ethyl ketone, methyl n-propyl ketone, diethyl ketone, 2-hexanone, 3-hexanone, methyl-t-butyl ketone, di-n-propyl ketone, diisopropyl ketone, diisobutyl ketone, di-n-amyl ketone, diacetyl, acetylacetone, cyclohexanone, and benzophenone; aliphatic hydrocarbons including saturated aliphatic hydrocarbons such as n-hexane, 2-methylhebtane, 3-methylhebtane, 2,2-dimethylbutane, 2,3-dimethylbutane, n-hebtane, 2-methylhexane, 3-methylhexane, 2,2-dimethylpentane, 2,3-dimethylpentane, 2,4-dimethylpentane, 3,3-dimethylpentane, 3-ethylpentane, 2,2,3-trimethylbutane, and cyclohexane and unsaturated hydrocarbons such as 1-hexene, 1-heptene, 1-octene, and cyclohexene; and aromatic hydrocarbons such as benzene, toluene, o-xylene, m-xylene, p-xylene, ethylbenzene, n-propylbenzene, cumene, n-butylbenzene, t-butylbenzene, styrene, and allylbenzene.

Of these, for example, methanol, ethanol, acetone, methyl ethyl ketone, xylene, and toluene are preferred, and acetone and methanol are particularly preferred in terms of operability and ease of distillation recovery of the reaction solvent after cleaning.

For the cleaning of the alkali metal salt such as potassium chloride resulting from the desalting polycondensation reaction, water is preferably used, or acidic water containing oxalic acid or acetic acid at a low concentration may be used.

For the conditions of this cleaning step, the amount of cleaning solvent used, the number of times of cleaning, and the cleaning temperature may be appropriately selected according to the amounts of residual reaction solvent and residual alkali metal salt desired to be removed.

The polymer that has been through the cleaning step can be dried.

The water-containing polymer that has been through the cleaning is dried by a known method. As a dryer, a known apparatus such as an evaporator, a shelf-type oven, or a tumbler can be used.

The target water content is typically 0.5 wt% or less, preferably 0.4 wt% or less, still more preferably 0.3 wt% or less.

This drying step may be performed under any conditions as long as the temperature is equal to or lower than the melting point of the polymer and water can be removed. To avoid contact with air as much as possible, the drying step is preferably performed under reduced pressure in an inert gas (e.g., nitrogen or argon) atmosphere or under a stream of inert gas.

The polyether nitrile obtained by the production method according to the present invention has a melt flow rate (MFR) in the range of 2 to 50 g/10 min as measured at 390°C under a load of 5000 g in accordance with ISO 1133 and exhibits high and less variable flowability when melted by heating, and thus can provide a stable heat-molded article excellent in high heat resistance, surface smoothness, dimensional stability, etc. and having improved usage quality.

The melt flow rate (MFR) of the polyether nitrile obtained by the production method according to the present invention is preferably in the range of 3 to 50 g/10 min, more preferably in the range of 4 to 50 g/10 min, still more preferably in the range of 5 to 50 g/10 min.

According to the production method according to the present invention, even if a polyether nitrile is repeatedly produced in one and the same polycondensation reactor, there is no big difference in the value of melt flow rate between a polyether nitrile obtained in the first polycondensation reaction and polyether nitriles obtained in the second and subsequent polycondensation reactions, and a polyether nitrile having stable melt flowability can be produced.

The molecular weight (number-average molecular weight (Mn), weight-average molecular weight (Mw)) of the polyether nitrile produced by the production method according to the present invention depends on the intended use and is not particularly limited, and the molecular weight as determined by GPC is in the range of 40,000 to 1,000,000, preferably in the range of 50,000 to 500,000, still more preferably in the range of 60,000 to 300,000. If the molecular weight of the polymer obtained is less than 40,000, the polymer may have poor mechanical strength, and if it is 1,000,000 or more, the polymer may be difficult to mold.

The reduced viscosity $\eta_{red}$ of the polyether nitrile produced by the production method according to the present invention is 1 or more and 5 or less, preferably 1.2 or more and 4.5 or less, more preferably 1.5 or more and 4.0 or less, particularly preferably 1.5 or more and 3.5 or less.

The reduced viscosity $\eta_{red}$ in the present invention is a value determined by a method described as a measurement method in EXAMPLES given later.

The polymer dried in the above drying step is basically a powder; thus, to produce a molded article, this powder can be used to produce a molding material (pellets or chips). The method of producing a molding material by melting the polyether nitrile powder by heating is not particularly limited, but is preferably performed under exclusion of oxygen or in an inert atmosphere such as nitrogen.

As a molding apparatus used to produce a molding material such as pellets or chips, a melt-kneading apparatus such as a single-screw, twin-screw, or multi-screw extruder, a Banbury mixer, a kneader, or a roller is typically used, but a molding material such as pellets or chips may be produced by cutting a sheet prepared using a compression molding machine.

An industrially preferred process in producing a molding material is as follows. The polyether nitrile powder obtained through polycondensation, pulverization, cleaning, and vacuum drying is directly transferred to, for example, a silo sealed with nitrogen gas or the like and stored there without being exposed to the outside air. When formed into a shape such as pellets or chips, the powder is transferred to an extruder together with nitrogen gas through a pipe without any treatment. The powder is then melt-kneaded in no contact with oxygen (air), and a molten polymer from a die is pelletized by cutting in water or water-cooled cutting of a strand.

For the conditions of the process of producing this molding material (pellets or chips), in melt processing, the operation described above is performed at a temperature sufficient to melt the polymer. The upper limit of the temperature in the melt processing is 500°C or lower. The polyether nitrile powder used in Examples, which is obtained using biphenol, has a melting point of 364°C and thus is preferably processed at a temperature higher than the melting point, 380°C or higher. The upper limit of the temperature is preferably 480°C or lower, more preferably 450°C or lower, still more preferably 430°C or lower, particularly preferably 400°C or lower.

The polyether nitrile powder or molding material obtained by the production method according to the present invention may be mixed with at least one selected from the group consisting of a thermoplastic resin material (A), an additive (B), and a filler (C) to provide a polyether nitrile resin composition.

The polyether nitrile resin composition can be produced in the same manner as the above-described process of producing a molding material. For the mixing of the components, methods such as 1) preliminarily mixing the polyether nitrile powder or preformed polyether nitrile molding material and other components ((A) to (C) described above) and then transferring the mixture to an extruder, 2) preliminarily preparing molding materials of a plurality of polyether nitrile resin compositions having different compositions using the polyether nitrile powder or preformed polyether nitrile molding material and other components ((A) to (C) above), mixing the molding materials in predetermined amounts so as to give a desired content ratio, and then transferring the mixture to an extruder, 3) directly feeding the polyether nitrile powder or preformed polyether nitrile molding material and other components ((A) to (C) above) into an extruder can be employed, and these methods are preferably performed in an inert atmosphere.

Specific examples of the thermoplastic resin material (A) contained in the polyether nitrile resin composition include high-density polyethylene, medium-density polyethylene, isotactic polypropylene, acrylonitrile-butadiene-styrene (ABS) resin, acrylonitrile-styrene (AS) resin, acrylic resin, fluorocarbon resin (e.g., polytetrafluoroethylene), polyester, polycarbonate, polyarylate, aliphatic polyamide, aromatic polyamide, polysulfone, polyether sulfone, polyether ketone,

polyether ether ketone, polyphenylene sulfide, polyetherimide, polyamide-imide, polyesterimide, and modified polyphenylene oxide.

Specific examples of the additive (B) contained in the polyether nitrile resin composition include hydrophilic agents, antioxidants, secondary antioxidants, flame retardants, flame retardant aids, plasticizers, lubricants, release agents, antifogging agents, weathering stabilizers, light stabilizers, hydrolysis resistance improvers, flowability improvers, UV absorbers, antistatic agents, metal deactivators, near-infrared absorbers, and colorants (dyes and pigments).

Specific examples of the filler (C) contained in the polyether nitrile resin composition include various metal powders, powders of inorganic acid metal salts (e.g., calcium carbonate, zinc borate, calcium borate, zinc stannate, calcium sulfate, and barium sulfate), powders of metal oxides (e.g., magnesium oxide, iron oxide, titanium oxide, zinc oxide, and alumina), powders of metal hydroxides (e.g., aluminum hydroxide, magnesium hydroxide, zirconium hydroxide, and alumina hydrate (boehmite)), powders of metal sulfides (e.g., zinc sulfide, molybdenum sulfide, and tungsten sulfide), silver nanowires, carbon fibers, glass fibers, carbon nanotubes, graphene, and ceramic materials such as silica

These (A) to (C) can be mixed in an appropriate amount depending on the intended use.

To obtain a polyether nitrile resin composition molding material having high melt flowability by melt-molding the polyether nitrile resin composition in the present invention under exclusion of oxygen or in an inert atmosphere, the amount of (A) to (C) is preferably 90 wt% or less relative to the total weight of the polyether nitrile resin composition.

The polyether nitrile obtained by the method of the present invention can be processed into a molding material by the above-described method or subjected to the production of a molded article or a part using the molding material, and has heat resistance, chemical resistance, flame resistance, and high mechanical properties. The polyether nitrile can be used in, for example, electric and electronic applications such as personal computers and semiconductor parts, automotive applications such as gears, bearings, and housings around engines, or applications in the medical equipment and aerospace fields, and allows these articles to be stably produced.

## EXAMPLES

The present invention will now be described more specifically with reference to Examples, but it should be noted that the present invention is not limited to these Examples.

Analysis methods in the present invention are as follows.

### <Analysis methods>

#### (1) Method of measuring reduced viscosity $\eta_{red}$ (dL/g)

A sample in an amount of 0.1 g was dissolved in about 5 g of parachlorophenol at 180°C, and the solution was transferred to a 10 mL measuring flask. The flask was made up to volume at 40°C. This was weighed out with a 5 mL whole pipette and put into an Ostwald tube (capillary tube, 0.75 mm). The Ostwald tube was allowed to stand in a constant-temperature bath at 40.0°C for 15 minutes, and a flow time T was measured to calculate the reduced viscosity $\eta_{red}$ (dL/g) of a polymer by the following formula.

[Calculation formula]

$$\text{Reduced viscosity } \eta_{red} = \{(T/T_0) - 1\}/C$$

C: solution concentration (g/dL), T: flow time of solution, $T_0$: flow time of solvent

#### (2) Melt flow rate (MFR) measurement

In accordance with ISO 1133, a sample dried under vacuum at 120°C for 16 hours was measured using a Melt Flow indexer D4003 (manufactured by Dynisco JAPAN) at a temperature of 390°C under a load of 5000 g for a preheating time of 5 minutes.

#### (3) Measurement of molecular weight

The weight-average molecular weight (Mw) and the number-average molecular weight (Mn) of a polyether nitrile obtained were measured with the following apparatus under the following conditions using a solution obtained by 10-fold diluting a 1% p-chlorophenol solution of the polyether nitrile with chloroform.

Apparatus: gel permeation chromatography (GPC): 515 HPLC pump, 717plus Autosampler, 2487 UV/Vis Detector (manufactured by Nihon Waters K.K.)
Column: 2 × PLgel 5pMIXED-D, 7.5 × 300 mm (Agilent Technologies)
Column temperature: 40°C
Flow rate: 1.0 mL/min
Injection volume: 2.5 μL
Detection: UV/Vis Detector: 254 nm
Column calibration: monodisperse polystyrene (EasiCal PS-1, Agilent Technologies)
Molecular weight calibration: relative calibration method (relative to polystyrene)
Analysis software: Empower3 (manufactured by Nihon Waters K.K.)

<Reference Example 1>

A four-necked 3 L reactor (made of SUS316L) was equipped with a mechanical stirrer, a thermometer, a dry nitrogen inlet, a reflux condenser, and a bottom valve. The reactor, the stirrer, and the reflux condenser were unused ones and manually washed with water, washed by degreasing with acetone, and dried in advance before being installed.
In this reactor, 298.45 g (1.735 mol) of 2,6-dichlorobenzonitrile (hereinafter referred to as DCBN for short), 323.08 g (1.735 mol) of 4,4'-biphenol (hereinafter referred to as BP for short), 251.79 g (1.822 mol) of anhydrous potassium carbonate, 60 g of toluene, and 1562 g of anhydrous sulfolane were loaded. This mixture was heated from room temperature under a stream of nitrogen, and with stirring at 250 rpm, the temperature was increased to 160°C with heating under reflux. At 130°C or higher, carbon dioxide was readily released from the reaction of potassium carbonate-biphenol. After 3 hours at 160°C, the oligomerization reaction of DCBN and BP was completed, and the cooling water in the reflux condenser was then replaced with warm water to remove water and toluene through an outlet, whereby the temperature was raised to 220°C, where polymerization was performed for 3 hours.
After the polymerization, the valve at the bottom of the reactor was opened at 220°C, and a polymerization reaction product was taken out and allowed to cool and solidify.
The amount of the polymerization reaction product taken out was 98 wt% relative to the theoretical yield of a polymer obtainable from the raw material used, and the polymer remained in the reactor.
This solid product taken out, after being pulverized with a Waring blender, was washed several times each with acetone and distilled water and dried in a vacuum oven at 120°C for 16 hours to obtain 470 g of a polyether nitrile powder (97% yield relative to the polymerization reaction product taken out).
This polymer powder had a reduced viscosity $\eta_{red}$ of 2.19.
The polymer powder had a weight-average molecular weight (Mw) of 77300 and a number-average molecular weight (Mn) of 30100 as measured by GPC.
This polyether powder had a MFR of 11.5 (g/10 min).

<Comparative Example 1>

Using the reactor in Reference Example 1 in which 2 wt% of the polymerization reaction product of the preceding batch remained, in the same manner as in Reference Example 1, the raw materials and solvent such as DCBN, BP, anhydrous potassium carbonate, and anhydrous sulfolane were loaded, oligomerization and polymerization were performed, and a polymerization reaction product was taken out and allowed to cool and solidify to obtain a polyether powder as in Reference Example 1.
This polymer powder had a reduced viscosity $\eta_{red}$ of 2.14.
The polymer powder had a weight-average molecular weight (Mw) of 75700 and a number-average molecular weight (Mn) of 32500 as measured by GPC.
The MFR of this polyether powder was measured; surprisingly, the MFR decreased to 5.3 (g/10 min), which was lower by 54% than that in Reference Example 1.

<Example 1>

After the polymerization reaction product of Comparative Example 1 was taken out, 500 g of N-methyl-2-pyrolidone (NMP) was added to the reactor in which the polymerization reaction product remained in an amount of 2 wt% relative to the amount loaded, and NMP was refluxed in the reactor with stirring at 200°C for 30 minutes to wash the entire inner surface of the reactor. The washing solution was discharged through the bottom valve, and the same operation was then repeated once more.
Next, 2 L of acetone was added, and the acetone was refluxed in the reactor with heating and stirring to wash the entire inner surface of the reactor and discharged through the bottom valve.

Thereafter, 2 L of ion-exchanged water was added, and the water was refluxed in the reactor with heating and stirring to wash the entire inner surface of the reactor and discharged. This operation was performed twice.

For the polymer in each discharged washing solution, the NMP washing solution, because of being a solution, was partially put into acetone, and the precipitate was filtered, washed with water, and dried. For the acetone washing solution and the water washing solution, the whole precipitate was filtered and dried. Each precipitated polymer was weighed to determine the total amount discharged by washing. As a result of calculation, the residual polymer amount in the polymerization reaction product in the reactor after washing was found to be 112 ppm relative to the theoretical yield of the polymer.

Using this washed reactor, a polyether nitrile was obtained in the same manner as in Reference Example 1.

This polymer powder had a reduced viscosity $\eta_{red}$ of 2.17.

The polymer powder had a weight-average molecular weight (Mw) of 76700 and a number-average molecular weight (Mn) of 32800 as measured by GPC. This polyether powder had a MFR of 11.5 (g/10 min); compared with Reference Example 1, there were no decrease in MFR.

<Example 2>

In Example 1, the polymerization reaction product remaining after being taken out was collected. After the reactor was washed in the same manner as in Example 1, the raw materials and solvent were loaded in the same manner as in Reference Example 1, and the polymerization reaction product collected was further added in an amount of 0.3 wt% (3000 ppm) of the theoretical yield. The process of polymerization, taking out, and washing was performed by the same operation as in Reference Example 1 to obtain a polyether nitrile, and its MFR was measured.

The MFR was 10.6 (g/10 min); compared with Reference Example 1, the rate of decrease in MFR was 8% within 10%.

The result of Example 2 has confirmed that a polyether nitrile retaining high flowability can be obtained when the amount of the remaining or staying polymerization reaction product of the preceding batches in the reactor is 3000 ppm or less, which is hitherto unknown.

## Claims

1. A method for producing a polyether nitrile obtained by allowing an aromatic dihydroxy compound (I) and a dihalobenzonitrile compound (II) to undergo a polycondensation reaction in the presence of a basic compound (III), the method comprising:

   a step (Step 1) of feeding a reaction raw material composed of the aromatic dihydroxy compound (I), the dihalobenzonitrile compound (II), and the basic compound (III) and a reaction solvent to a polycondensation reactor to perform a polycondensation reaction;
   a step (Step 2) of taking out a polymer obtained by the polycondensation reaction from the polycondensation reactor; and
   a step (Step 3) of removing the polymer remaining in the polycondensation reactor and feeding the reaction solvent and the reaction raw material anew to the polycondensation reactor to perform a new polycondensation reaction.

2. The method for producing a polyether nitrile according to Claim 1, wherein the aromatic dihydroxy compound (I) is a compound represented by general formula (1) below, and the dihalobenzonitrile compound (II) is a compound represented by general formula (2) below.
   [Chem. 1]

   **HO-R-OH** **(1)**

   (In the formula, R represents a divalent group represented by general formula (1a) below or general formula (1b) below.)

[Chem. 2]

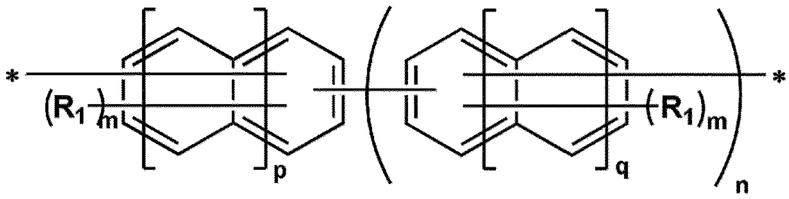

(1a)

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, n represents 0 or 1, p and q each independently represent 0, 1, or 2, and each * represents a bonding position.)

[Chem. 3]

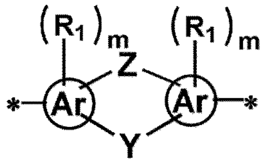

(1b)

(In the formula, $R_1$ and m are as defined in general formula (1a), Y represents an oxygen atom, a sulfur atom, a sulfonyl group, a carbonyl group, an alkylidene group having 1 to 15 carbon atoms, a fluorine-containing alkylidene group having 2 to 15 carbon atoms, a cycloalkylidene group having 5 to 15 carbon atoms, a phenylmethylidene group, a phenylethylidene group, a phenylene group, or a fluorenylidene group, Z represents an oxygen atom, a sulfur atom, or non-bridging, each Ar independently represents an aryl group having 6 to 8 carbon atoms, and each * represents a bonding position.)

[Chem. 4]

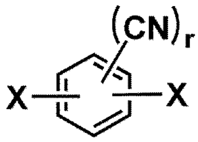

(2)

(In the formula, each X independently represents a halogen atom, and r represents an integer of 1 to 4.)

**3.** The method for producing a polyether nitrile according to Claim 2, wherein R in the compound represented by general formula (1) is general formula (1a') below or general formula (1a") below, and r in the compound represented by general formula (2) is 1.

[Chem. 5]

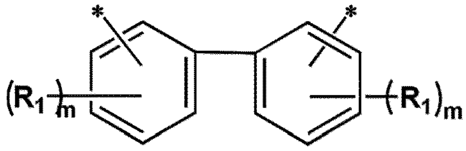

(1a')

(In the formula, $R_1$, m, and * are as defined in general formula (1a).)

[Chem. 6]

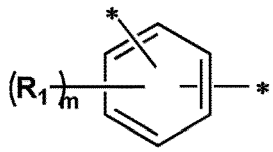 (1a")

(In the formula, $R_1$, m, and * are as defined in general formula (1a).)

**4.** The method for producing a polyether nitrile according to Claim 3, wherein the compound represented by general formula (1) is at least one selected from hydroquinone, resorcin, and 4,4'-biphenol.

**5.** The method for producing a polyether nitrile according to Claim 1, wherein the basic compound (III) is an alkali metal compound.

**6.** The production method according to Claim 1, wherein a residual polymer amount after the polymer remaining in the reactor has been removed in Step 3 is 5000 ppm or less relative to a theoretical yield of a polymer obtainable from the reaction raw material fed into the reactor when the new polycondensation reaction is performed.

**7.** The production method according to Claim 1, further comprising a step (Step 4) of cleaning the polymer taken out from the polycondensation reactor in Step 2.

**8.** The production method according to Claim 1, wherein a resulting polyether nitrile has a reduced viscosity $\eta_{red}$ of 1 or more and 5 or less.

**9.** The production method according to Claim 1, wherein the polycondensation reactor is a batch-type reactor.

**INTERNATIONAL SEARCH REPORT**

International application No.
**PCT/JP2022/039948**

**A. CLASSIFICATION OF SUBJECT MATTER**

***C08G 65/40***(2006.01)i
FI: C08G65/40

According to International Patent Classification (IPC) or to both national classification and IPC

**B. FIELDS SEARCHED**

Minimum documentation searched (classification system followed by classification symbols)

C08G65/00-67/48; C08L1/00-101/16; C08K3/00-13/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 11-158264 A (IDEMITSU PETROCHEMICAL CO., LTD.) 15 June 1999 (1999-06-15) claims, paragraphs [0011], [0019], [0032], [0039]-[0044] | 1-9 |
| Y | JP 06-184240 A (PHILLIPS PETROLEUM CO.) 05 July 1994 (1994-07-05) paragraphs [0004], [0006] | 1-9 |
| Y | JP 06-206910 A (KANEGAFUCHI CHEM. IND. CO., LTD.) 26 July 1994 (1994-07-26) paragraph [0002] | 1-9 |
| Y | JP 2009-242593 A (NIPPON SHOKUBAI CO., LTD.) 22 October 2009 (2009-10-22) paragraph [0013] | 1-9 |
| A | JP 08-259689 A (IDEMITSU PETROCHEMICAL CO., LTD.) 08 October 1996 (1996-10-08) claims | 1-9 |

☐ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 December 2022** | **17 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/039948**

| Patent document cited in search report | Publication date (day/month/year) | Patent family member(s) | Publication date (day/month/year) |
|---|---|---|---|
| JP 11-158264 A | 15 June 1999 | (Family: none) | |
| JP 06-184240 A | 05 July 1994 | EP 527475 A1<br>column 2, lines 21-37<br>CA 2075764 A1<br>TW 213926 B<br>KR 10-1993-0004341 A | |
| JP 06-206910 A | 26 July 1994 | (Family: none) | |
| JP 2009-242593 A | 22 October 2009 | (Family: none) | |
| JP 08-259689 A | 08 October 1996 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 60147439 A
- JP 61055120 A